# EUROPÄISCHE PATENTSCHRIFT

(11) **EP 2 377 756 B1**
(45) Veröffentlichungstag und Bekanntmachung des Hinweises auf die Patenterteilung: **11.05.2016**
(21) Anmeldenummer: 11003188.7
(22) Anmeldetag: 15.04.2011
(51) Int. Cl.: B63B 39/00, G05D 1/08

(54) **Beurteilung der Schiffsdynamik**
Evaluation of ship dynamics
Evaluation de la dynamique d'un bateau

(30) Priorität: 19.04.2010 DE 102010015359
(43) Veröffentlichungstag der Anmeldung: 19.10.2011
(73) Patentinhaber: ThyssenKrupp Marine Systems GmbH, 24143 Kiel (DE)
(72) Erfinder: Scharmacher, Manuel, 24114 Kiel (DE); Dignath, Florian, 81249 München (DE); Diekmann, Andreas, 85586 Poing (DE); Zheng, Qinghua, 82024 Taufkirchen (DE)
(74) Vertreter: ThyssenKrupp Intellectual Property GmbH

(56) Entgegenhaltungen:
- WO-A1-2010/118752
- DE-A1- 10 045 921
- US-A1- 2010 057 279
- DAN OBREJA ET AL: "Parametric Rolling at Main Resonance", BRODOGRADNJA, BRODARSKI INSTITUT, HR, vol. 59, no. 4, 1 January 2008 (2008-01-01), pages 340-347, XP002544425, ISSN: 0007-215X

## Beschreibung

Die Erfindung betrifft ein Verfahren zur Früherkennung der Gefahr des Aufklingens von Rollschwingungen bei einem Wasserfahrzeug mit dem im Oberbegriff des Anspruchs 1 angegebenen Merkmalen.

Bei Wasserfahrzeugen, wie beispielsweise bei Frachtschiffen, insbesondere bei Containerschiffen, aber auch bei Unterseebooten, kann es bei bestimmten Begegnungsfrequenzen zwischen Wasserwellen und Wasserfahrzeug zu parametererregten Rollschwingungen kommen. Diese Rollschwingungen können insbesondere im Resonanzfall stark aufklingen und zu stark erhöhten Rollwinkeln führen. Beispielsweise können bei parametererregten Rollschwingungen von großen Containerschiffen Rollwinkel größer als 20° auftreten.

Rollschwingungen können insbesondere bei Unterseebooten in verstärkter Form auftreten, da deren Schiffsrumpf nicht für die Stabilität bei Überwasserfahrt, sondern hinsichtlich besonderer Erfordernisse, wie beispielsweise bezüglich Tauchfahrt und Akustik, optimiert ist. Unterseeboote weisen daher bei Überwasserfahrt typischerweise für das Rollverhalten ungünstige massengeometrische Verhältnisse auf. Bei Unterseebooten sind sogar Rollwinkel größer als 40° berichtet worden.

Um das Aufklingen oder die Gefahr des Aufklingens von Rollschwingungen möglichst früh erkennen zu können, ist es daher erforderlich, den Bewegungszustand eines Wasserfahrzeugs in Bezug auf eine Rollbewegungsresonanz zuverlässig beurteilen zu können.

Aus DE 100 45 921 A1 ist eine Vorrichtung bekannt, welche starke Rollbewegungen des Schiffes verhindern soll. Eine Bewegungsanalyse des Fahrzeugs erfolgt hierbei nicht.

US 2010 057 279 zeigt ein weiteres Beispiels des Standes der Technik.
Es ist Aufgabe der Erfindung, ein Verfahren zur Früherkennung der Gefahr des Aufklingens von Rollschwingungen bei einem Wasserfahrzeug im Bezug auf eine Rollbewegungsresonanz bereitzustellen, mit welchem der Bewegungszustand des Wasserfahrzeugs in Bezug auf eine Rollbewegungsresonanz in einfacher und zuverlässiger Weise erfasst werden kann.
Diese Aufgabe wird mit einem Verfahren mit den in Anspruch 1 angegebenen Merkmalen gelöst. Bevorzugte Weiterbildungen der Erfindung ergeben sich aus den Unteransprüchen, der nachfolgenden Beschreibung und der Zeichnung.
Bei dem erfindungsgemäßen Verfahren zur Erfassung des Bewegungszustands eines Wasserfahrzeugs in Bezug auf eine Rollbewegungsresonanz des Wasserfahrzeugs werden bei Fahrt zumindest die Hubbewegung sowie die Rollbewegung des Wasserfahrzeugs erfasst und zueinander in Beziehung gesetzt. Die Nähe des Bewegungszustandes des Wasserfahrzeugs zur Rollbewegungsresonanz kann durch die Erfassung sowohl der Hubbewegung und der Rollbewegung besonders zuverlässig und präzise erfasst werden. Insbesondere kann ein Aufklingen bzw. ein drohendes Aufklingen von Rollschwingungen kurzfristig, d.h. innerhalb weniger Roll- bzw. Hubschwingungsperioden des Wasserfahrzeugs, vor dem Auftreten kritischer Rollwinkel erkannt werden. Somit können bei einer mittels des erfindungsgemäßen Verfahrens erkannten Gefahr des Aufklingens von Rollschwingungen geeignete Maßnahmen zur Vermeidung von großen Rollwinkeln ergriffen werden.

Gemäß dem erfindungsgemäßen Verfahrens wird bzw. werden der Rollwinkel und/oder der zeitliche Verlauf des Rollwinkels erfasst. Auf diese Weise kann die Rollbewegung einfach und zuverlässig erfasst werden. Beispielsweise wird dabei der Rollwinkel und/oder eine oder mehrere seiner zeitlichen Ableitungen kontinuierlich über die Zeit erfasst. Alternativ und bevorzugt wird bei dem Verfahren der Rollwinkel und/oder eine oder mehrere seiner zeitlichen Ableitungen in zeitlich aufeinander folgenden, wiederholten Messungen oder Berechnungen, erfasst, beispielsweise in zeitlichen Abständen kleiner/gleich 50 Millisekunden, vorzugsweise in zeitlichen Abständen von 20 Millisekunden. Geeigneterweise wird bei dem erfindungsgemäßen Verfahren die Rollgeschwindigkeit, d.h. die erste zeitliche Ableitung des Rollwinkels, bestimmt. Zweckmäßigerweise dient die Bestimmung der zeitlichen Ableitung des Rollwinkels nicht notwendig oder nicht notwendig allein einer ggf. durchzuführenden Bestimmung der Rollleistung, wie sie weiter unten beschrieben ist, sondern die Bestimmung der zeitlichen Ableitung des Rollwinkels erhöht zudem auch die Genauigkeit der Bestimmung der Nähe des Bewegungszustands des Wasserfahrzeugs zur Rollbewegungsresonanz.

Dabei wird bzw. werden gemäß dem erfindungsgemäßen Verfahren der Rollwinkel und/oder der zeitliche Verlauf des Rollwinkels bei einem vorbestimmten Teil der Hubbewegung des Wasserfahrzeugs erfasst. Geeigneterweise wird dazu bei dem Verfahren der Hub des Wasserfahrzeugs kontinuierlich über die Zeit oder in zeitlich aufeinander folgenden, wiederholten Messungen, beispielsweise in zeitlichen Abständen kleiner/gleich 50 Millisekunden, vorzugsweise in zeitlichen Abständen von 20 Millisekunden, erfasst. Beispielsweise wird der Verlauf des Rollwinkels während einer halben Hubbewegung oberhalb der Gleichgewichtslage des Wasserfahrzeugs im Wasser beobachtet. Insbesondere wird sowohl bei der Hubbewegung nach oben, also beim Auftauchen des Wasserfahrzeugs aus dem Wasser, als auch bei der anschließenden Hubbewegung nach unten, also beim Eintauchen des Wasserfahrzeugs, jeweils der Rollwinkel beim Passieren der Gleichgewichtslage und insbesondere die Differenz der so erfassten Rollwinkel ermittelt. Vorteilhafterweise bildet diese Differenz ein direktes Maß für das Aufklingen der Rollschwingung. So lässt sich aus einer über mehrere Hubbewegungen bzw. Hubperioden wachsenden Differenz der erfassten Rollwinkel auf ein drohendes Aufklingen der Rollbewegung schließen.

Zusätzlich wird bzw. werden die Rollleistung und/oder ihr zeitlicher Verlauf bestimmt. Unter Rollleistung ist dabei die je Zeiteinheit in die Rollbewegung des Wasserfahrzeugs eingebrachte Rollenergie zu verstehen. Wird mittels des erfindungsgemäßen Verfahrens eine große Rollleistung erfasst, so bedeutet dies, dass viel Energie in die Rollbewegung eingebracht wird, was darauf hinweist, dass der Rollwinkel in Zukunft zu steigen droht. Eine große Rollleistung ist somit ein Indiz für ein drohendes Aufklingen der Rollschwingung des Wasserfahrzeugs. Vorteilhaft wird bei dem Verfahren daher die Rollleistung als Maß für das Aufklingen von Rollschwingungen des Wasserfahrzeugs herangezogen.

Zweckmäßigerweise wird dabei die Rollleistung zu einem gegebenen Zeitpunkt derart bestimmt, dass die Rollgeschwindigkeit, d.h. die erste zeitliche Ableitung des Rollwinkels, mit dem aktuellen Auftriebsmoment des Wasserfahrzeugs multipliziert wird. Die Rollgeschwindigkeit kann beispielsweise bestimmt werden, indem der Rollwinkel kontinuierlich über die Zeit oder in wiederholten, zeitlich aufeinander folgenden Messungen erfasst wird und der so erfasste zeitliche Verlauf des Rollwinkels zeitlich abgeleitet wird. Alternativ oder zusätzlich kann zur Bestimmung der Rollgeschwindigkeit auch die Rollwinkelbeschleunigung, die die zweite zeitliche Ableitung des Rollwinkels darstellt und die rechnerisch oder durch Messung bestimmt werden kann, zeitlich integriert werden. Beispielsweise wird die Rollwinkelbeschleunigung durch Messung mittels Beschleunigungssensoren erfasst. Ferner kann die Rollgeschwindigkeit auch direkt mittels geeigneter Sensoren, beispielsweise Rollratenmessern, erfasst werden.

Vorzugsweise wird bei dem erfindungsgemäßen Verfahrens alternativ oder zusätzlich zu der Bestimmung der Rollleistung die zeitliche Änderung der Rollleistung bestimmt. Beispielsweise wird die zeitliche Änderung der Rollleistung durch Differentiation des zeitlichen Verlaufes der Rollleistung ermittelt, wobei vorzugsweise die Rollleistung wie vorstehend beschrieben bestimmt wird. Zweckmäßigerweise werden dabei kurzzeitige Änderungen der erfassten Rollleistung, welche beispielsweise aus stochastischen, messtechnischen und/oder numerischen Umständen herrühren, nicht oder zumindest nicht vollständig berücksichtigt. Vorzugsweise wird die Differentiation der Rollleistung dazu mittels einer Kombination aus Tiefpassfiltern und Differenzierern durchgeführt.

Die zeitliche Änderung der Rollleistung bildet dabei ein Indiz für den zukünftigen Verlauf der Rollleistung, welche ihrerseits bei einem hohen Wert auf ein künftiges Aufklingen der Rollschwingung des Wasserfahrzeugs hinweist. Die zeitliche Änderung der Rollleistung erlaubt folglich eine besonders frühzeitige Beurteilung der Nähe des Bewegungszustandes des Wasserfahrzeugs zu einer Rollbewegungsresonanz, sodass bei dem Verfahren auch die zeitliche Änderung der Rollleistung als Maß für ein drohendes Aufklingen der Rollschwingung herangezogen werden kann. Dieses Maß kann vorteilhaft als Kriterium für eine Frühwarnung vor dem Aufklingen von Rollschwingungen verwendet werden. Zweckmäßig kann eine solche Frühwarnung hinsichtlich des Seegangs in der näheren Umgebung des Wasserfahrzeugs oder aber bezüglich des generellen Kurses des Wasserfahrzeugs zu den Wasserwellen und/oder dem generell herrschendem Seegang erfolgen.

In einer Variante des erfindungsgemäßen Verfahrens, welche alternativ oder zusätzlich durchgeführt werden kann, wird bzw. werden die Rollenergie und/oder der zeitliche Verlauf der Rollenergie bestimmt. Beispielsweise wird zur Bestimmung der Rollenergie die durch Messung und/oder Berechnung, insbesondere wie hinsichtlich des erfindungsgemäßen Verfahrens beschrieben, bestimmte Rollleistung zeitlich integriert. Zweckmäßigerweise wird dabei jedes Mal dann, wenn das Wasserfahrzeug bei der Rollbewegung seine Gleichgewichtslage, also den Rollwinkel 0°, durchläuft, der aktuelle Wert der Rollenergie bestimmt und jeweils mit dem Wert der Rollenergie des Wasserfahrzeugs beim vorangehenden Durchlauf des Wasserfahrzeugs durch seine Gleichgewichtslage verglichen. Alternativ kann der aktuelle Wert der Rollenergie auch mit Rollenergien bei einem früheren als dem vorherigen Durchlauf oder mit einem Mittelwert mehrerer früherer Durchläufe des Wasserfahrzeugs durch seine Gleichgewichtslage verglichen werden. Beispielsweise werden bei dem Verfahren diese Werte der Rollenergien miteinander verglichen, indem aus diesen Werten die Differenz gebildet wird. Diese Differenz der Rollenergien stellt dabei ein direktes Maß für das Aufklingen der Rollschwingung dar.

Vorzugsweise wird bei dem erfindungsgemäßen Verfahren der Stampfwinkel des Wasserfahrzeugs erfasst und mit der Hub- und/oder Rollbewegung in Beziehung gesetzt. Vorteilhaft wird dazu der Stampfwinkel des Wasserfahrzeugs kontinuierlich über die Zeit oder in zeitlich aufeinander folgenden, wiederholten Messungen, beispielsweise in zeitlichen Abständen kleiner/gleich 50 Millisekunden, vorzugsweise in zeitlichen Abständen von 20 Millisekunden, erfasst. Die Berücksichtigung des Stampfwinkels erlaubt dabei eine Ermittlung der Nähe des Bewegungszustands des Wasserfahrzeugs zur Rollbewegungsresonanz mit einer besonders hohen Genauigkeit.

Zweckmäßigerweise wird bei dem erfindungsgemäßen Verfahren ein Auftriebskennfeld des Wasserfahrzeugs herangezogen. In diesem Auftriebskennfeld ist das Auftriebsmoment bevorzugt in Abhängigkeit vom Hub und/oder vom Rollwinkel, insbesondere zudem auch in Abhängigkeit vom Stampfwinkel des Wasserfahrzeugs, verzeichnet. Mittels dieses Auftriebskennfeldes lässt sich das aktuell vorherrschende Auftriebsmoment des Wasserfahrzeugs aus dem aktuell erfassten Hub und/oder dem Rollwinkel, sowie ggf. aus dem aktuell erfassten Stampfwinkel, des Wasserfahrzeugs direkt bestimmen. Zweckmäßigerweise wird bei dem erfindungsgemäßen Verfahren mit dem derart bestimmten aktuellen Auftriebsmoment zusammen mit der aktuell erfassten bzw. bestimmten Rollgeschwindigkeit die Rollleistung wie vorstehend hinsichtlich des erfindungsgemäßen Verfahrens beschrieben bestimmt.

Bei einer bevorzugten Weiterbildung des erfindungsgemäßen Verfahrens werden Zustandsgrenzen für eine oder mehrere mit der Roll- und/oder Hubbewegung zusammenhängende Größen bestimmt, insbesondere voneinander abhängige Zustandsgrenzen für zwei oder mehrere solcher Größen. Insbesondere sind solche mit der Roll- und/oder Hubbewegung zusammenhängende Größen der Rollwinkel, der Hub, die erste sowie höhere zeitliche Ableitungen des Rollwinkels und des Hubes, die Rollleistung, die Rollenergie und die erste sowie höhere zeitliche Ableitungen von Rollleistung und Rollenergie. Die Zustandsgrenzen bilden dabei ein Kriterium für kritische Rollwinkel, bzw. Rollgeschwindigkeiten und/oder kritische Hubhöhen bzw. Hubgeschwindigkeiten und sind derart bestimmt, dass diese erreicht werden, wenn das Aufklingen der Rollschwingung bereits einen gewissen Grad erreicht hat bzw. wenn sich der Bewegungszustand des Wasserfahrzeugs bereits zu einem gewissen Grad in Resonanz befindet. Folglich kann bei dem erfindungsgemäßen Verfahren die Nähe der mit der Roll- und/oder Hubbewegung zusammenhängenden Größen zu diesen Zustandsgrenzen als Maß für das Aufklingen der Rollschwingung herangezogen werden.

Bevorzugt werden diese Zustandsgrenzen bei dem erfindungsgemäßen Verfahren als zuvor bei Testfahrten mit dem Wasserfahrzeug ermittelte Zustandsgrenzen vorgehalten,

Bevorzugt wird bei dem erfindungsgemäßen Verfahren ein Resonanzlevel als Maß für die Nähe des Bewegungszustands des Wasserfahrzeugs zu einer Rollbewegungsresonanz bestimmt. Beispielsweise bildet eine skalare Größe den Resonanzlevel, Besonders bevorzugt werden dabei eine oder mehrere derjenigen Größen zur Bestimmung des Resonanzlevels herangezogen, die in der vorangehenden Beschreibung als Maß für das Aufklingen bzw. das drohende Aufklingen der Rollschwingung des Wasserfahrzeugs beschreiben sind. Idealerweise werden mehrere solcher Größen zur Bestimmung des Resonanzlevels miteinander in Beziehung gesetzt. Die Zusammenfassung mehrerer dieser Größen zu einem einzigen Resonanzlevel als Kriterium zur Beurteilung der Nähe des Bewegungszustandes des Wasserfahrzeugs zur Rollbewegungsresonanz erhöht dabei die Sicherheit dieser Beurteilung; auf diese Weise gehen stochastische Einflüsse aus dem Seegang bei einzelnen dieser Kriterien dann mit verringertem Gewicht in den Resonanzlevel ein. Beispielsweise werden diese Größen derart normiert und zusammengefasst, dass sie einen Resonanzlevel zwischen 0 und 1 bilden, wobei 0 den Ruhezustand des Wasserfahrzeugs und der Wert 1 ein eindeutiges Aufklingen einer Rollschwingung bezeichnet. Beispielsweise geht der Resonanzlevel aus den vorbezeichneten Größen durch Multiplikation, Addition oder Maximalwertbestimmung der einzelnen Größen hervor, vorzugweise werden die einzelnen Größen bei der Berechnung des Resonanzlevels geeignet gewichtet bzw. normiert. Zur Gewichtung bzw. Normierung der einzelnen Größen werden beispielsweise zuvor mittels Testfahrten bestimmte Normierungs- bzw. Gewichtungsfaktoren bzw. -vorschriften herangezogen.

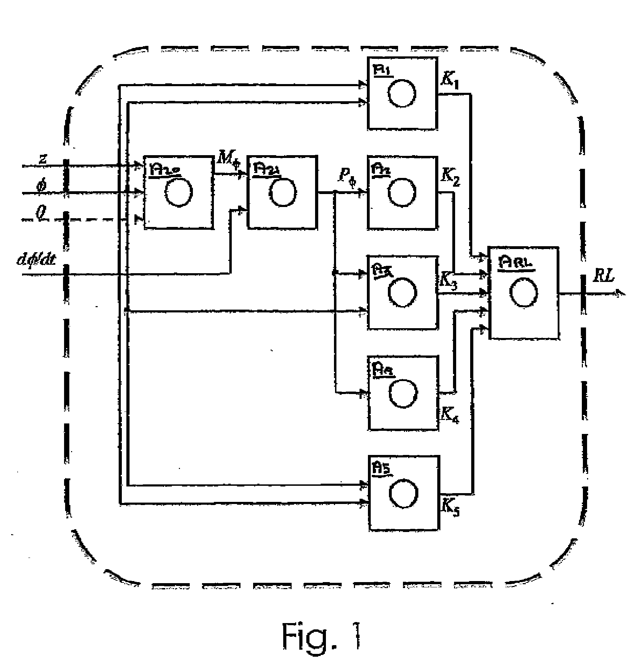

Nachfolgend wird die Erfindung anhand eines in der Zeichnung dargestellten Ausführungsbeispiels näher erläutert. Die Figur 1 zeigt ein Blockschaltbild für die Ausführung eines erfindungsgemäßen Verfahrens in einer Prinzipskizze.

Das in Fig. 1 dargestellte Verfahren wird zur Erfassung des Bewegungszustands eines Wasserfahrzeugs, hier beispielsweise eines Unterseebootes, in Bezug auf eine Rollbewegungsresonanz des Wasserfahrzeugs eingesetzt. Alternativ ist das Verfahren in entsprechender Weise auch zur Erfassung des Bewegungszustandes von anderen Wasserfahrzeugen, beispielsweise von Frachtschiffen, insbesondere Containerschiffen. einsetzbar.

Bei dem Verfahren wird fortlaufend der Hub z des Wasserfahrzeugs relativ zu seiner Gleichgewichtslage durch wiederholt aufeinander folgende Messungen im zeitlichen Abstand von 20 Millisekunden bestimmt. Darüber hinaus wird während der Fahrt die Rollbewegung des Wasserfahrzeugs erfasst, indem der Rollwinkel *Φ* des Wasserfahrzeugs durch wiederholt aufeinander folgende Messungen im Abstand von 20 Millisekunden gemessen wird. Alternativ können der Rollwinkel *Φ* und der Hub z auch kontinuierlich erfasst werden.

Der aktuell erfasste Hub z und der aktuell erfasste Rollwinkel *Φ* werden einer ersten Auswerteeinrichtung A1 zugeführt, die den Hub z und den Rollwinkel *Φ* miteinander in Beziehung setzt, In der Auswerteeinrichtung A₁ wird stets sowohl bei der Hubbewegung des Wasserfahrzeugs nach oben (also beim Auftauchen des Wasserfahrzeugs aus dem Wasser) als auch bei der anschließenden Hubbewegung des Wasserfahrzeugs nach unten (beim Eintauchen des Wasserfahrzeugs) jeweils der Rollwinkel *Φ* beim Passieren der Gleichgewichtslage des Wasserfahrzeugs ermittelt. Die Differenz dieser beiden Rollwinkel *Φ* wird als direktes Maß für das Aufklingen der Rollschwingung herangezogen und stets mit ihrem aktuellen Wert als Kriterium K1 ausgegeben, welches für die Erfassung des Bewegungszustands des Wasserfahrzeugs in Bezug auf eine Rollbewegungsresonanz des Wasserfahrzeugs wie unten beschrieben herangezogen wird.

Der aktuell erfasste Hub z und der aktuell erfasste Rollwinkel *Φ* werden ferner einer Auswerteeinrichtung A₂₀ zugeführt, die anhand des erfassten Hubs z und des erfassten Rollwinkels *Φ* das aktuelle Auftriebsmoment *MΦ* des Wasserfahrzeugs ermittelt. Zur Erhöhung der Genauigkeit werfeeinrichtung A₂₀ übergeben, Die Auswerteeinrichtung A₂₀ verfügt zur Bestimmung des Auftriebsmoments *MΦ* über ein Auftriebskennfeld, welches das Auftriebsmoment *MΦ* des Wasserfahrzeugs in Abhängigkeit vom Hub z, vom Rollwinkel *Φ* und vom Stampfwinkel Θ verzeichnet. Dieses Auftriebskennfeld ist dabei zuvor durch Testfahrten mit dem Wasserfahrzeug bestimmt worden. Die Auswerteeinrichtung A₂₀ übergibt das mittels des Auftriebskennfeldes bestimmte aktuelle Auftriebsmoment *MΦ* an eine Auswerteeinrichtung A21.

Ferner wird bei dem dargestellten Verfahren die aktuelle Rollgeschwindigkeit d*Φ*/d*f* des Wasserfahrzeugs durch zeitliche Ableitung des Rollwinkels *Φ* berechnet und an die Auswerteeinrichtung A₂₁ übermittelt. Mittels der Auswerteeinrichtung A₂₁ wird das Auftriebsmoment M*_{Φ}* mit der Rollgeschwindigkeit d*Φ*/d*f* multipliziert und somit die aktuell in die Rollbewegung eingebrachte Rollleistung *P_{Φ}* erhalten. Die aktuelle Rollleistung *P_{Φ}* wird von der Auswerteeinrichtung A21 an eine Auswerteeinrichtung A₂ übermittelt, welche den Wert der Rollleistung *P_{Φ}* als Kriterium K₂, welches ein Maß für die Größe der Rollleistung und somit für ein drohendes Aufklingen der Rollschwingung bildet, ausgibt.

Die Auswerteeinrichtung A₂₁ übergibt die aktuelle Rollleistung *P_{Φ}* ferner an eine Auswerteeinrichtung A₃, die die Rollleistung *P_{Φ}* über die Zeit integriert und somit die Rollenergie bestimmt. Ferner wird zudem stets der aktuelle Rollwinkel *Φ* an die Auswerteeinrichtung A₃ übergeben. Die Auswerteeinrichtung A₃ speichert jedes Mal dann, wenn das Wasserfahrzeug bei der Rollbewegung seine Gleichgewichtslage, d.h. den Rollwinkel *Φ* = 0°, durchläuft, den aktuellen Wert der Rollenergie. Dieser Wert der Rollenergie wird mit dem jeweils vorangegangenen Wert der Rollenergie beim Durchlaufen der Gleichgewichtslage durch Subtraktion der vorangehend erfassten von der aktuell erfassten Rollenergie mit der vorangehend erfassten Rollenergie verglichen. Die so ermittelte Energiedifferenz bildet ein direktes Maß für das Aufklingen der Rollschwingung. Die Auswerteeinrichtung A₃ gibt diese Energiedifferenz als Kriterium K₃ aus.

Ferner übergibt die Auswerteeinrichtung A₂₁ die ermittelte aktuelle Rollleistung *P_{Φ}* an eine Auswerteeinrichtung A₄. Die Auswerteeinrichtung A₄ bestimmt durch Differentiation der aktuellen Rollleistung *P_{Φ}* nach der Zeit die aktuelle zeitliche Änderung der Rollleistung *P_{Φ}*. Um kurzzeitige Änderungen, die aus stochastischen, messtechnischen oder numerischen Umständen herrühren, dabei nicht zu berücksichtigen, wird die Differenziation durch eine Kombination aus Tiefpassfiltern und Differenzierern (in der Zeichnung nicht dargestellt) vorgenommen. Die resultierende Änderung der Rollleistung bildet ein Maß für den zukünftigen Verlauf der Rollleistung *P_{Φ}* und somit auch für das Aufklingen der Rollschwingung des Wasserfahrzeugs und dient folglich zur Frühwarnung vor dem Auftreten großer Rollwinkel. Die Filterkonstanten der Tiefpassfilter sind derart gewählt dass sich die Frühwarnung dabei auf die näherer Umgebung des Wasserfahrzeugs bezieht. Alternativ oder zusätzlich lassen sich die Filterkonstanten aber auch derart wählen, dass sich die Frühwarnung auf den generellen Kurs des Wasserfahrzeugs zu den Wellen bzw. dem generell vorherrschenden Seegang bezieht. Die Auswerteeinrichtung A₄ gibt die Änderung der Rollleistung *P_{Φ}* als Kriterium K₄ aus.

Der Hub z sowie der Rollwinkel *Φ* werden weiterhin einer Auswerteeinrichtung A₅ übermittelt, die den Hub z und den Rollwinkel *Φ* mit jeweils voneinander abhängigen Zustandsgrenzen, welche Grenzwerte für den Hub z und den Rollwinkel *Φ* bilden, vergleicht. Erreichen der Hub z und der Rollwinkel *Φ* diese Grenzwerte, so hat das Aufklingen der Rollschwingung bereits ein gewisses maximal zulässiges Maß erreicht bzw. befindet sich das Wasserfahrzeug bereits in einer maximal zulässigen Nähe zur Rollbewegungsresonanz. Abhängig von der Nähe des Hubs z und des Rollwinkels *Φ* zu den jeweiligen Grenzwerten ermittelt die Auswerteeinrichtung A₅ ein Kriterium K₅ und gibt dieses Kriterium K₅ aus. Ferner können in weiteren, nicht gesondert dargestellten Ausführungsbeispielen des Verfahrens zusätzlich zu den Zustandsgrößen Hub z und Rollwinkel *Φ* weitere mit der Hub- und/oder der Rollbewegung zusammenhängende Größen mit Grenzwerten verglichen werden. Beispielsweise können solche Größen die erste und/oder höhere zeitliche Ableitungen des Hubs z und/oder des Rollwinkels *Φ* sein. Diese Größen werden dann beispielsweise gemeinsam mit dem Hub z und dem Rollwinkel *Φ* erfasst oder aber durch zeitliche Ableitung des erfassten Hubs z und des erfassten Rollwinkels *Φ* bestimmt.

Die Kriterien *K₁*, *K₂*, *K₃, K₄* und *K₅* für die Nähe des Bewegungszustands des Wasserfahrzeuges zur Rollbewegungsresonanz werden in zeitlichen Abständen von 20 Millisekunden jeweils neu berechnet. Die Kriterien *K₁*, *K₂*, *K₃*, *K₄* und *K₅* werden von den Auswerteeinrichtungen A₁, A₂, A₃, A₄ und A₅ einer Auswerteeinrichtung A_{RL} übermittelt, welche die Kriterien *K₁*, *K₂, K₃, K₄* und *K₅* geeignet normiert und durch Multiplikation dieser normierten Kriterien ein skalares Kriterium RL bestimmt und ausgibt. Al-ternativ kann das Kriterium RL in weiteren, nicht gesondert dargestellten Ausführungsbeispielen des erfindungsgemäßen Verfahrens auch durch Addition oder Maximalwertbestimmung der Kriterien *K₁, K₂, K₃*, *K₄* und *K₅* bestimmt werden. Die skalare Größe *RL* kann nun genutzt werden, um im Falle kritischer parametererregter Rollschwingungen einen kurzeitigen Regeleingriff in die Fahrgeschwindigkeit des Wasserfahrzeugs und/oder dem aktuellen Kurs des Wasserfahrzeugs vorzunehmen.

Die Auswerteeinrichtungen A₁, A₂₀, A₂₁, A₂, A₃, A₄, A₅ und A_{RL} können dabei, wie in Figur 1 gezeigt, in einer einzigen Baugruppe (in Figur 1 gestrichelt umrissen) enthalten sein, die einen an Bord des Wasserfahrzeugs befindlichen Resonanzbeobachter bildet.

### Bezugszelchenliste

- *z* -: Hub
- *Φ* -: Rollwinkel
- *Θ* -: Stampfwinkel
- d*Φ*/d*f* -: Rollgeschwindigkeit
- *MΦ* -: Auftriebsmoment
- *P_{Φ}* -: Rollleistung
- A₁ -: Auswerteeinrichtung
- A₂₀ -: Auswerteeinrichtung
- A₂₁ -: Auswerteeinrichtung
- A₂ -: Auswerteeinrichtung
- A₃ -: Auswerteeinrichtung
- A₄ -: Auswerteeinrichtung
- A₅ -: Auswerteeinrichtung
- *K₁* -: Kriterium
- *K₂* -: Kriterium
- *K₃* -: Kriterium
- *K₄* -: Kriterium
- *K₅* -: Kriterium
- A_{RL} -: Auswerteeinrichtung
- *RL* -: Resonanzlevel

## Patentansprüche

1. Verfahren zur Früherkennung der Gefahr des Aufklingens von Rollschwingungen bei einem Wasserfahrzeug in Bezug auf eine Rollbewegungsresonanz, bei welchem der Bewegungszustand im Bezug auf Rollbewegungsresonanz erfasst wird, in dem bei Fahrt zumindest die Hubbewegung sowie die Rollbewegung erfasst und zueinander in Bezug gesetzt werden, wobei der Rollwinkel (*Φ*) oder sein zeitlicher Verlauf bei einem vorbestimmten Teil der Hubbewegung erfasst wird, **dadurch gekennzeichnet, dass** damit die Rollleistung (P*Φ*), die Rollenergie oder der zeitliche Verlauf der Rollleistung oder der Rollenergie bestimmt wird und als Maß für ein drohendes Aufklingen der Rollschwingung herangezogen wird.

2. Verfahren nach Anspruch 1, bei welchem der Stampfwinkel (Θ) erfasst und mit der Hub- und/oder Rollbewegung in Beziehung gesetzt wird.

3. Verfahren nach Anspruch 1 oder 2, bei welchem ein Auftriebskennfeld des Wasserfahrzeugs herangezogen wird.

4. Verfahren nach einem der vorhergehenden Ansprüche, bei welchem Zustandsgrenzen für eine oder mehrere mit der Rollund/oder Hubbewegung zusammenhängende Größen (*z*, *Φ*) bestimmt werden, insbesondere voneinander abhängige Zustandsgrenzen für zwei oder mehrere solcher Größen (*z*, *Φ*).

5. Verfahren nach einem der vorhergehenden Ansprüche, bei welchem ein Resonanzlevel (*RL)* als Maß für die Nähe des Bewegungszustands des Wasserfahrzeugs zu einer Rollbewegungsresonanz bestimmt wird.

6. Verfahren nach Anspruch 5, bei welchem eine durch Testfahrten ermittelte Gewichtung für die in den Resonanzlevel (*RL*) eingehenden Größen (*K₁*, *K₂*, *K₃*, *K₄*, *K₅*) vorgenommen wird.

## Claims

1. Method for the early detection of the risk of growing roll oscillations in the case of a watercraft in relation to a roll resonance, in which the movement state in relation to the roll resonance is detected, in which, during seaway, at least the heave motion and the roll motion are detected and related to one another, wherein the roll angle (*Φ*) or the time profile thereof during a predetermined part of the heave motion is detected, **characterized in that** this is used to determine the roll power (P*_{Φ}*), the roll energy or the time profile of the roll power or the roll energy and this is used as a measure for impending growth of the roll oscillation.

2. Method according to Claim 1, wherein the pitch angle (*Θ*) is detected and related to the heave and/or roll motion.

3. Method according to Claim 1 or 2, wherein a buoyancy characteristic map of the watercraft is used.

4. Method according to one of the preceding claims, in which state limits for one or more variables (*z*, *Φ*) related to the roll and/or heave motion are determined, more particularly state limits for two or more of such variables (*z*, *Φ*) depending on one another.

5. Method according to one of the preceding claims, in which a resonance level (*RL*) is determined as a measure for the vicinity of the movement state of the watercraft to a roll resonance.

6. Method according to Claim 5, wherein the variables (*K₁, K₂, K₃, K₄, K₅)* included in the resonance level *(RL)* are weighted, said weighting having been established by sea trials.

## Revendications

1. Procédé de détection précoce du risque d'application d'oscillations de roulis sur un navire par rapport à une résonance de mouvement de roulis, dans lequel l'état de mouvement est détecté par rapport à la résonance de mouvement de roulis en détectant, lors d'un trajet, au moins le mouvement de montée ainsi que le mouvement de roulis et en les mettant en relation, dans lequel l'angle de roulis (φ) ou son évolution temporelle est détecté pour une partie prédéterminée du mouvement de tangage,
**caractérisé en ce que** la puissance du roulis (P_{φ}), l'énergie de roulis ou l'évolution temporelle de la puissance de roulis ou l'énergie de roulis est ainsi déterminée et est prise en compte en tant que mesure pour lutter contre une menace d'application de l'oscillation de roulis.

2. Procédé selon la revendication 1, dans lequel l'angle de tangage (θ) est détecté et est mis en relation avec le mouvement de montée et/ou de roulis.

3. Procédé selon la revendication 1 ou 2, dans lequel un champ caractéristique de flottabilité du navire est pris en compte.

4. Procédé selon l'une quelconque des revendications précédentes, dans lequel des limites d'état sont déterminées pour une ou plusieurs grandeurs (z, φ) associées au mouvement de roulis et/ou de montée, notamment des limites d'état dépendant les unes des autres pour deux ou plusieurs de ces grandeurs (z, φ).

5. Procédé selon l'une quelconque des revendications précédentes, dans lequel un niveau de résonance *(RL)* est déterminé en tant que mesure de la proximité de l'état de mouvement du navire par rapport à une résonance de mouvement de roulis.

6. Procédé selon la revendication 5, dans lequel une pondération déterminée par des séances d'essai est réalisée pour les grandeurs (*K₁, K₂, K₃, K₄, K₅*) intervenant dans le niveau de résonance *(RL).*
